# EUROPEAN PATENT APPLICATION

(11) **EP 4 675 896 A1**
(43) Date of publication of application: **07.01.2026**
(21) Application number: 24763478.5
(22) Date of filing: 31.01.2024
(51) Int. Cl.: H02K 3/12, G06F 30/10

(54) **ALTERNATING CURRENT MACHINE, DESIGN METHOD THEREFOR, PRODUCTION METHOD, AND DESIGN ASSISTANCE DEVICE**

(30) Priority: 28.02.2023 JP 2023029683
(71) Applicant: Kyoto University, Kyoto-shi, Kyoto 606-8501 (JP)
(72) Inventor: NAKAMURA, Taketsune, Kyoto-shi, Kyoto 606-8501 (JP); DONG, Tenghui, Kyoto-shi, Kyoto 606-8501 (JP)
(74) Representative: Bals & Vogel Patentanwälte PartGmbB
(86) International application number: PCT/JP2024/003096
(87) International publication number: WO 2024/180993

(57) **Abstract**

An alternating current machine includes: a rotor (22); a stator (20) having a plurality of slots (21) placed opposite the rotor (22) in a circumference direction of the stator (20); and windings of a plurality of phases wound in the plurality of slots (21). A total number of windings of a first phase, which is any one of the plurality of phases, stored in each of the plurality of slots (21) periodically varies in the circumference direction. A distribution of the total number of windings of the first phase for each period is approximated by Fourier series that uses a fundamental component and a third harmonics component as primary components. A fitted curve of the distribution has a shape obtained by superimposing the third harmonic on a positive half period of a fundamental sinusoidal function, in a phase relationship such that a value of the sinusoidal function is enhanced around a peak value and is canceled around a zero-value.

## Description

### TECHNICAL FIELD

The present disclosure relates to an alternating current machine, such as a permanent magnet synchronous machine and an induction machine, and a design method, a production method, and a design assistance device thereof.

### BACKGROUND ART

Raising the efficiency of the rotary machine, accounting for nearly half of the worldwide electricity consumption, is urgently needed for reduction of greenhouse gas emissions.

Various design methods for achieving higher efficiency of a single rotary machine have been proposed to date. For example, NPLs 1 and 2 disclose methods that start from a ubiquitous basic structural model and then finely adjusts sizes such as the circumferential width of a slot of a stator, as variables, to perform optimization.

### CITATION LIST

### NON PATENT LITERATURE

NPL 1: Hosokawa, and 3 others, "An Optimal Design Method for Efficiency of Permanent Magnet Motors," the IEEJ Transaction D (Journal of Industry Applications), Vol. 121, No. 2, pp.171-177 (2001)

NPL 2: Ohnishi, and 1 other, "Investigation of Optimal Design of IPM Motor using Finite Elements and Optimization Technique," the IEEJ Transaction D (Journal of Industry Applications), Vol. 121, No. 3, pp.397-402 (2001)

### SUMMARY OF INVENTION

### TECHNICAL PROBLEM

The sizing optimization as disclosed in NPLs 1 and 2 above depend on a topology of the initial shape of an alternating current machine and it is, therefore, hard to expect a significant improvement in performance. For example, since a unified discussion for structures of stator slots is difficult, and a structure considered as optimal may differ among designers.

The present disclosure is made in view of the above background, and one of objects of the present disclosure is to provide an alternating current machine design method which enables unique determination of an optimal structure of a stator slot, independent of a designer. Another object of the present disclosure is to provide an alternating current machine that enables a reduction of torque ripple and an increase of the average torque by designing the alternating current machine according to the above design method.

### SOLUTION TO PROBLEM

An alternating current machine design method according to one embodiment includes a first step, a second step, a third step, and a fourth step. In the first step, a computer approximates an absolute value of a first periodic function, which changes in a circumference direction of a stator of the alternating current machine in a magnetic pole period of the stator, with a pulse function having a pulse width depending on an absolute value of the first periodic function, to determine an area, in which the pulse function is on-pulse, as a winding placement area. Here, the first periodic function is a function obtained by superimposing a third harmonic on a sinusoidal function that is a fundamental wave, in a phase relationship enhancing a value of the sinusoidal function around a peak value of the sinusoidal function and cancelling a value of the sinusoidal function around a zero-value of the sinusoidal function. In the second step, the computer places a large number of windings, each having a small cross-sectional area, equidistantly in the determined winding placement area. In the third step, the computer expands the cross-sectional area of each winding to combine nearest neighbor windings to generate a new winding as a winding assemblage when adjacent windings overlap or when a ratio of a portion of the stator, in which the windings are wound, to a circumferential length of the stator is greater than a predetermined ratio. Here, the winding assemblage is a winding having a total number of a plurality of windings combined and a sum of cross-sectional areas of the plurality of windings combined. Combining a first winding and a second winding includes placing a combined winding between the first winding and the second winding. In the fourth step, when a total number of winding assemblages, obtained as a result of expanding the cross-sectional area of each winding, reaches a desired count, the computer determines positions of placements of the winding assemblages to be positions of placements of slots storing the winding assemblages.

An alternating current machine according to one embodiment includes: a rotor; a stator having a plurality of slots placed opposite the rotor in a circumference direction of the stator; and windings of a plurality of phases wound in the plurality of slots. A total number of windings of a first phase, which is any one of the plurality of phases, stored in each of the plurality of slots periodically varies in the circumference direction. A distribution of the total number of windings of the first phase for each period is approximated by Fourier series that uses a fundamental component and a third harmonics component as primary components. A fitted curve of the distribution has a shape obtained by superimposing the third harmonic on a positive half period of a sinusoidal function that is a fundamental wave, in a phase relationship enhancing a value of the sinusoidal function around a peak value of the sinusoidal function and cancelling a value of the sinusoidal function around a zero-value of the sinusoidal function.

### ADVANTAGEOUS EFFECTS OF INVENTION

According to the above design method, the structure of the stator slot can be uniquely determined, independent of a designer, while maintaining ideal electromagnetic field properties of the sine wave as much as possible. According to the alternating current machine above, the torque ripple can be reduced, and the average torque can be increased.

### BRIEF DESCRIPTION OF DRAWINGS

Fig. 1 is a schematic diagram of a structure of a rotary machine addressed in the present disclosure.
Fig. 2 is a flowchart illustrating a procedure for creating a line-current approximation model.
Fig. 3 is a diagram showing a specific example of a modulated wave and a carrier wave of pulse-width modulation.
Fig. 4 is a diagram showing winding counts in each winding placement area when windings are evenly spaced in each area in the example of Fig. 3.
Fig. 5 is a flowchart illustrating a design procedure for a slot structure.
Fig. 6 is a diagram for illustrating a method of combination of a winding having the number of turns of a1 and a cross-sectional area S1 and a winding having the number of turns of a2 and a cross-sectional area S2.
Fig. 7 is a diagram showing a specific example of the slot structure.
Fig. 8 is a diagram showing a table of the number of windings disposed in each of slots SL1 to SL6 of Fig. 7, and a circumferential width and a radial thickness of each slot.
Fig. 9 is a diagram showing requirements of a motor on a plane of torque-rotational speed.
Fig. 10 is a diagram showing a table of specifications of a 25 kW permanent magnet synchronous motor designed as Comparative Example.
Fig. 11 is a diagram showing a cross-sectional view of the permanent magnet synchronous motor designed as Comparative Example.
Fig. 12A is a diagram showing a result of analysis of torque characteristics obtained for a maximum power point of the permanent magnet synchronous motor according to Comparative Example of Fig. 11 (a full output torque).
Fig. 12B is a diagram showing a result of analysis of torque characteristics obtained for a maximum power point of the permanent magnet synchronous motor according to Comparative Example of Fig. 11 (the full output torque ripple and its fundamental component).
Fig. 12C is a diagram showing a result of analysis of torque characteristics obtained for a maximum power point of the permanent magnet synchronous motor according to Comparative Example of Fig. 11 (a full output torque ripple and its triplen harmonics component).
Fig. 13 is a diagram showing a cross-sectional view of a 25 kW permanent magnet synchronous motor designed by a self-assembly method 1.
Fig. 14 is a diagram showing a percentage of the number of turns of each phase for each stator slot of Fig. 13.
Fig. 15A is a diagram showing a result of analysis of torque characteristics obtained for a maximum power point of the permanent magnet synchronous motor having the structure of Figs. 13 and 14 (a full output torque).
Fig. 15B is a diagram showing a result of analysis of torque characteristics obtained for a maximum power point of the permanent magnet synchronous motor having the structure of Figs. 13 and 14 (the full output torque ripple and its fundamental component).
Fig. 15C is a diagram showing a result of analysis of torque characteristics obtained for a maximum power point of the permanent magnet synchronous motor having the structure of Figs. 13 and 14 (a full output torque ripple and its triplen harmonics component).
Fig. 16 is a typical magnetic flux density vector plot corresponding to Figs. 15A to 15C.
Fig. 17A is a diagram for illustrating principles of an average-torque improvement method (a sine wave and a triplen harmonic).
Fig. 17B is a diagram for illustrating principles of the average-torque improvement method (a sine wave and a skewed distribution).
Fig. 18 is a diagram showing U-phase, V-phase, and W-phase current distributions by the line-current approximation model, prior to performance of a self-assembly design method 2.
Fig. 19 is a diagram showing a cross-sectional view of a 25 kW permanent magnet synchronous motor designed by the self-assembly method 2.
Fig. 20 is a diagram showing a percentage of the number of turns of each phase for each stator slot of Fig. 19.
Fig. 21A is a diagram showing a result of analysis of torque characteristics obtained for a maximum power point of the permanent magnet synchronous motor having the structure of Figs. 19 and 20 (a full output torque).
Fig. 21B is a diagram showing a result of analysis of torque characteristics obtained for a maximum power point of the permanent magnet synchronous motor having the structure of Figs. 19 and 20 (the full output torque ripple and its fundamental component).
Fig. 21C is a diagram showing a result of analysis of torque characteristics obtained for a maximum power point of the permanent magnet synchronous motor having the structure of Figs. 19 and 20 (a full output torque ripple and its triplen harmonics component).
Fig. 22 is a flowchart illustrating one example of an alternating current machine production method.
Fig. 23 is a block diagram showing an example configuration of a computer for executing the design procedure illustrated in Figs. 2 and 5.
Fig. 24 is a functional block diagram showing a function of the computer as a design assistance device .

### DESCRIPTION OF EMBODIMENTS

Hereinafter, embodiments will be described with reference to the accompanying drawings. Embodiment 1, initially, proposes a model for an ideal stator structure, disregarding the shape of the stator slot (referred to as a "line-current approximation model" in the present disclosure). Next, variations are continuously made to the slot structure while maintaining the performance of the line-current approximation model as much as possible to cause the slot structure to transition to a practical slot structure. This provides a design method of a stator having a unique slot structure, independent of a designer (referred to as a "self-assembly design method" in the present disclosure).

Embodiment 2 provides a description of a 25 kW railway permanent magnet motor, as a specific application example of the stator design method by the line-current approximation-self-assembly design method according to Embodiment 1.

In the following description, the same or corresponding components will be given the same reference characters and will not be described repeatedly.

### <Embodiment 1>

### [Structure of Rotary Machine]

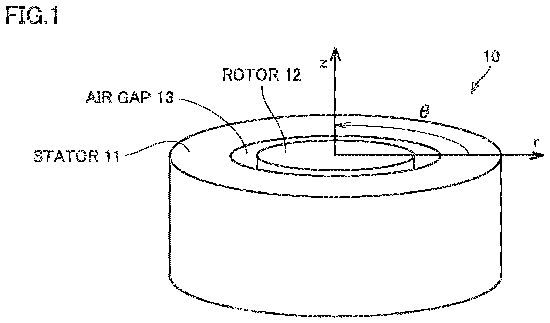

Fig. 1 is a schematic diagram of a structure of a rotary machine addressed in the present disclosure. As shown in Fig. 1, the rotary machine has an inner-rotor structure in which a rotor 12 is disposed within a stator 11. The space between stator 11 and rotor 12 will be referred to as an air gap 13. A cylindrical coordinate system is employed in which z axis is the rotational axis of rotor 12, and θ direction is the direction of rotation of rotor 12. Note that in the following, a case where an alternating-current power is input to stator 11, that is, a case where rotary machine 10 is an alternating current machine is addressed. While a case where rotary machine 10 is of an inner-rotor type will also be described, as shown Fig. 1, an outer-rotor rotary machine in which the rotor 12 is disposed outside the stator 11 can also be similarly addressed.

### [Line-Current Approximation Model]

A distribution of a rotating magnetic field, caused by a stator winding, includes many harmonics components due to the influence of the shape or placement of slots. Thus, with the aim of a spatial distribution that can approximately implement an ideal rotating magnetic field distribution, initially, regarding a slot shape, suppose that the winding is a line current, and a cross-sectional shape of the slots is disregarded. Regarding the slot placement, the concept of pulse width modulation (PWM) utilized for inverters is spatially applied to approximately cause a desired magnetomotive force distribution. Since a magnetomotive force distribution caused by one winding results in a square wave, a high state of a pulse wave (i.e., an on-pulse) can be interpreted as being corresponding to placing the winding.

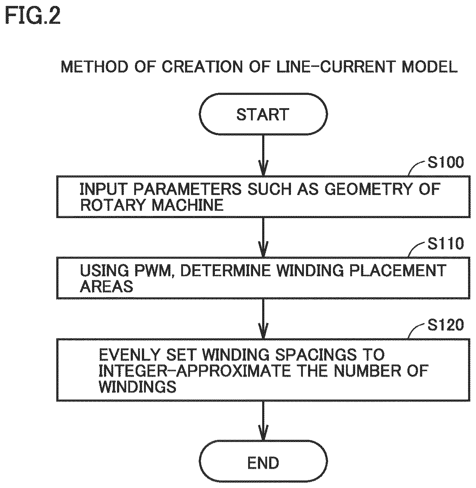

Fig. 2 is a flowchart illustrating a procedure for creating a line-current approximation model. Respective steps of Fig. 2 are implemented by the computer executing a program.

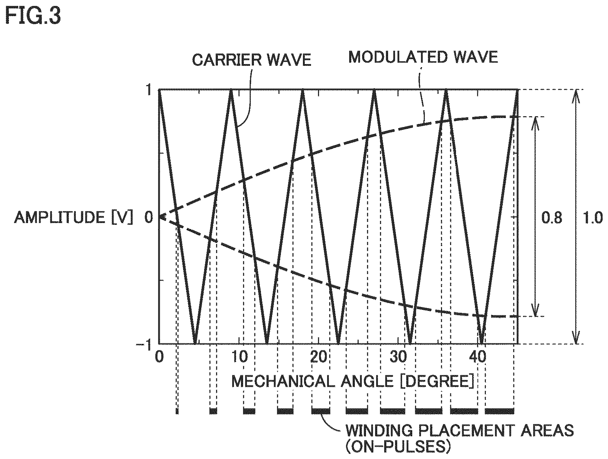

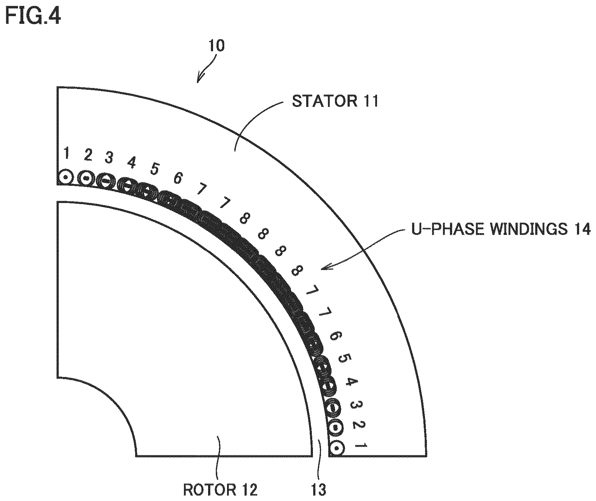

In step S100, the computer receives inputs of parameters, from a user, such as the geometry of rotary machine 10, the pole count of rotary machine 10, a modulation rate and a carrier frequency of PWM, and winding spacing, etc. The geometry of rotary machine 10 refers to a physical size of rotary machine 10. Specifically, outer and inner diameters of rotor 12, outer and inner diameters of stator 11, and the length of stator 11 in z direction are input as the geometry of rotary machine 10. As an example, the example placement of the line current distribution shown Figs. 3 and 4 is as follows: stator outer diameter: 112 mm; stator inner diameter: 56 mm; rotor outer diameter: 55 mm; rotor inner diameter: 16 mm; and length in z direction: 60 mm.

In the next step S110, using the concept of PWM, the computer approximates the absolute value of a first periodic function (corresponding to a modulated wave of PWM), which changes in the circumference direction in a magnetic pole period of the stator of the alternating current machine, with a pulse function having a pulse width depending on the absolute value of the first periodic function, based on comparison between the first periodic function and a second periodic function (corresponding to a carrier wave of PWM) having an amplitude greater than the first periodic function and a spatial frequency that is sufficiently higher than the first periodic function. The computer determines a region where the approximated pulse function is an on-pulse, as a winding placement area. Specifically, an interval, in which the absolute value of an instantaneous value of the first periodic function is greater than the absolute value of an instantaneous value of the second periodic function to be compared to, is set to be an on-pulse region (i.e., the winding placement area).

As an example, the first periodic function is a sine wave. As specifically described in Embodiment 2, in order to reduce the torque ripple and increase the average torque value, desirably, the first periodic function is a function obtained by superimposing the sine wave, which is the fundamental wave, with its third harmonic in a phase relationship in which the peak position of the third harmonic matches the peak position of the fundamental wave. The second periodic function, to be compared to, is not particularly limited, and may be a triangular wave or a sawtooth wave. The period of the absolute value of the first periodic function is a mechanical angle of 360 / N [degree] (i.e., half the magnetic pole period), where N is the number of magnetic poles of the stator.

Fig. 3 is a diagram showing a specific example of a modulated wave and a carrier wave of PWM. Fig. 3 shows U-phase winding placement areas for a 3-phase 4-pole rotary machine, where the PWM modulation rate is 0.8, the modulated wave (the first periodic function) is a sine wave (the magnetic pole period is a mechanical angle of 180 degrees) as an example, and the period of the triangular wave (the second periodic function) is 9.0 degrees (mechanical angle). To facilitate the correspondence between the on-pulse region and the winding placement, the on-pulse region is set to a region in which the absolute value of an instantaneous value of the modulated wave is greater than the absolute value of an instantaneous value of the carrier wave and the absolute value of an instantaneous value of the antiphase of the modulated wave is greater than the absolute value of an instantaneous value of the carrier wave.

Note that V-phase winding placement areas are obtained by shifting the U-phase winding placement areas by an electrical angle of 120 degrees (for 3-phase 4-pole, a mechanical angle of 60 degrees). W-phase winding placement areas are obtained by shifting the U-phase winding placement areas by an electrical angle of negative 120 degrees (a mechanical angle of negative 60 degrees for a 3-phase 4-pole rotary machine). The modulation rate needs to be set to be less than or equal to 1.

Returning to Fig. 2, in the next step S120, the computer places a large number of windings, each having a small cross-sectional area, equidistantly in the winding placement areas determined in step S110. The winding spacings are evenly set to integer-approximate the number of lines in each winding placement area. For example, the calculation of Fig. 3 divides a half period of the sine wave by 10000 and sampled at every 0.018 degrees. Thus, this sampling cycle can be set to be the winding spacing. However, adjacent lines overlap, depending on a winding cross-sectional area. With this in mind, an example in which the winding spacing is set to be wider than the sampling cycle will be discussed next.

Note that, desirably, the modulation rate is 1.0, the number of windings is increased, and the spatial frequency of the carrier wave is made higher (the triangular wave cycle is made shorter) to reduce the total harmonic distortion (THD).

Fig. 4 is a diagram showing winding counts in each winding placement area when windings having small cross-sectional areas are evenly spaced in each area in the example of Fig. 3. In Fig. 4, the spacings between the windings are 0.39 degrees, the circumferential width of each winding is 0.01 degrees, and the radial thickness of each winding is 5.0 µm. In this case, the cross-sectional shape of each winding is a generally square shape. Note that the cross-sectional shape of each winding is not limited to a square shape, and may be a rectangular shape or any other cross-sectional shape. As shown in Fig. 4, 102 U-phase windings 14 are disposed in a range of a mechanical angle of 90 degrees (an electrical angle of 180 degrees), which is half the magnetic pole period. Accordingly, a total of 306 windings of the three phases are disposed in the range of the mechanical angle of 90 degrees.

The winding placement of Fig. 4, for example, when the voltage source is 40V, the supply frequency is 10 Hz, the electrical conductivity of the stator windings is 5.98 × 10⁷ S/m, and the relative permeability between the stator material and the rotor material is 10000, the winding current density is 1.64 × 10⁵ A/mm², which is significantly greater than a practical current density of 4.0 A/mm². Thus, an operation is performed in which the winding cross-sectional area is continuously increased and neighbor windings are combined, while magnitudes of currents conducting through the windings are maintained. This uniquely determines the structure of the slots.

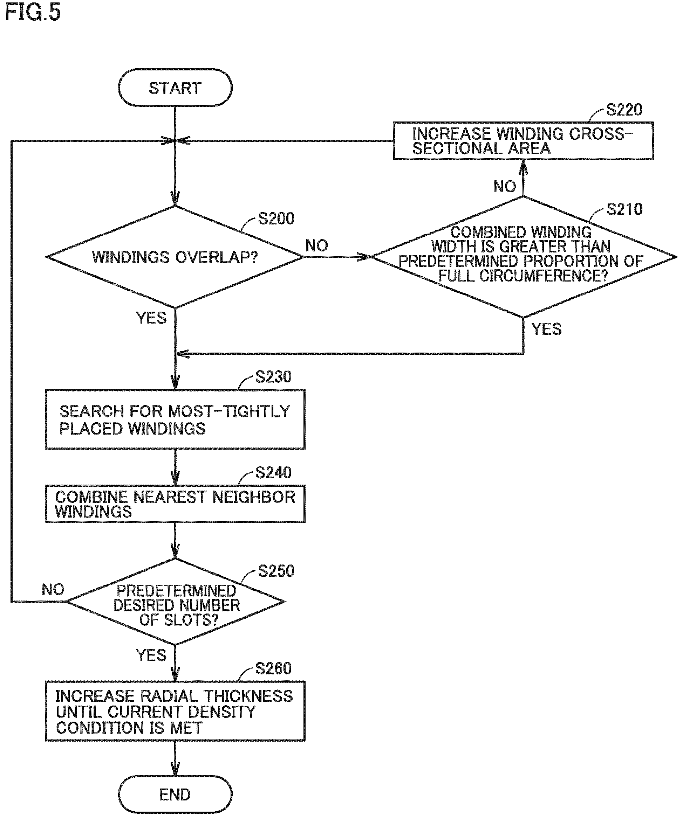

Fig. 5 is a flowchart illustrating a design procedure for the slot structure. Respective steps of Fig. 5 are implemented by the computer executing a program. Assume that a line current distribution has been created according to the flowchart of Fig. 2 upon the start of the procedure of Fig. 5.

In step S200, the computer determines whether windings overlap. If the windings do not overlap (NO in step S200), the computer, in step S210, determines whether the combined winding width is greater than a predetermined proportion of the full circumference of the stator. For example, the predetermined proportion is 50% of the full circumference. This condition is required to ensure sufficient magnetic permeance between windings.

If the windings do not overlap (NO in step S200) and the combined winding width is not greater than the predetermined proportion of the full circumference (NO in step S210), the computer passes the process to step S220. In step S220, the computer increases the winding cross-sectional area by the predetermined proportion and returns the process to step S200.

In contrast, if the windings overlap (YES in step S200) or the combined winding width is greater than the predetermined proportion of the full circumference (YES in step S210), the computer passes the process to step S230. In step S230, the computer searches for most-tightly placed windings, and, in the next step S240, combines nearest neighbor windings. The combined winding will also be referred to as a winding assemblage. The winding assemblage has a total number of windings combined and the sum of the cross-sectional areas of the windings combined.

Specifically, the computer searches all windings (the windings include the winding assemblage) for a winding the combined distance of which to the left and right windings is the smallest (this winding will be referred to as A). Next, the computer selects a closer one to winding A (this winding will be referred to as B) of the left and right windings of winding A, and combines windings A and B. By way of example, a newly-generated winding C is disposed at a position internally dividing a distance between windings A and B at the inverse ratio of the cross-sectional areas of A and B. Winding C may be disposed at any other position insofar as the position is between windings A and B. Moreover, the combined cross-sectional area and combined number of turns of windings A and B are carried on to winding C maintaining a similar cross-sectional shape. Note that the shape of each winding may be a square shape, a rectangular shape, or any other shape.

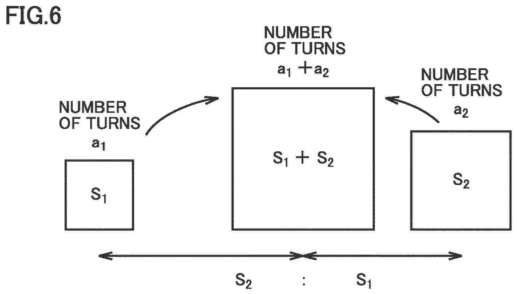

Fig. 6 is a diagram for illustrating a method of combining a winding having the number of turns of a₁ and a cross-sectional area S₁ (i.e., a winding assemblage) and the winding having the number of turns of a₂ and a cross-sectional area S₂ (i.e., a winding assemblage). As shown in Fig. 6, a combined winding has a number of turns of a₁ + a₂, a cross-sectional area of S₁ + S₂, and a cross-sectional shape similar to the cross-sectional shape before the combination (in this case, a generally square shape). The combined winding is at a position internally dividing a distance between the position of the winding having cross-sectional area S₁ and the position of the winding having cross-sectional area S₂ by an inverse ratio S₂ : S₁ of the cross-sectional areas.

Returning to Fig. 5, in the next step S250, the computer determines whether the total number of winding assemblages of the stator is a predetermined desired number of slots. If the total number of winding assemblages is not the desired number of slots (NO in step S250), the computer returns the process to step S200 and repeats increasing the winding cross-sections and combining nearest neighbor windings.

If the total number of winding assemblages is a desired number of slots (YES in step S250), the computer passes the process to step S260. In step S260, the computer increases the radial thickness of each winding until the current density condition is met (i.e., the current density is less than or equal to 4.0 A/mm²). This ends the design procedure for the slot structure of the stator.

Next, a specific example of the slot structure created according to the flowchart of Fig. 5 is now described. By way of example, the PWM modulation rate is 1.0, and the period of the triangular wave, which is a carrier wave, is 2.0 degrees. The other parameters are the same as the case of Fig. 3. Moreover, in the initial state, the winding spacings are 0.018 degrees, the winding width is 0.01 degrees, and the radial thickness of the winding is 5.0 µm. In this case, the cross-sectional shape of the winding is a generally square shape. Suppose that the rotary machine is of 3-phase 4-pole, and the number of slots is six per mechanical angle of 90 degrees (an electrical angle of 180 degrees). Windings of at least two phases are inserted in every slot, and the areas for respective phases in a slot correspond to internally dividing the slot as a cross-sectional area proportional to the number of turns of a winding.

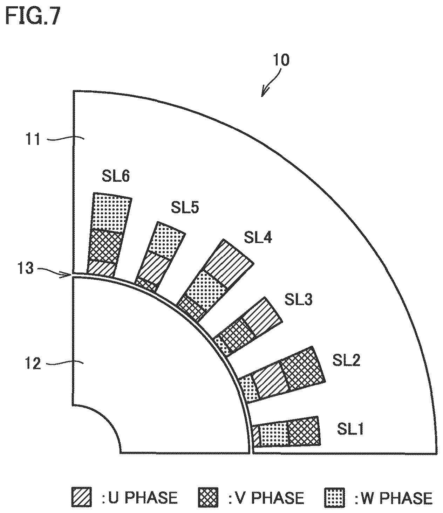

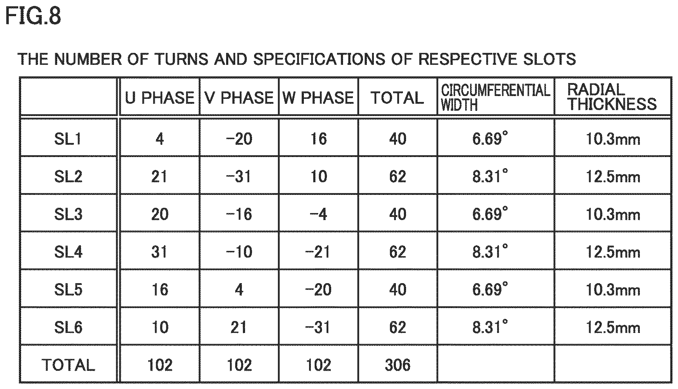

Fig. 7 is a diagram showing a specific example of the slot structure. Fig. 8 is a diagram showing a table of the number of windings disposed in each of slots SL1 to SL6 of Fig. 7, and the circumferential width and radial thickness of each slot. Fig. 8 shows that the current-conducting direction of the number of negative turns is opposite the current-conducting direction of the number of positive turns.

As shown in Figs. 7 and 8, the windings of all the phases are inserted in each slot, and distances between slots are substantially equal. While Fig. 7 shows the placement of the respective phase windings in a manner that a phase of a smaller number of windings is disposed farther inward of a slot, it should be noted that the present disclosure is not limited thereto. For example, the respective phase windings may be placed in a manner that a phase of a greater number of windings is disposed farther inward of a slot, or a U phase, V phase, and W phase are disposed in a slot in the listed order from the inside of the slot to the outside.

The winding distribution shown in Figs. 7 and 8 is, generally, as discussed below. Specifically, multiple slots formed in the stator are circumferentially placed opposite the rotor. A U-phase winding, a V-phase winding, and a W-phase winding are wound in the slots. Each slot stores the windings of at least two phases (all phases in the case of Figs. 7 and 8) of U phase, V phase, and W phase. The number of U-phase windings stored in each slot periodically varies in the circumference direction with a period of a mechanical angle 360 degrees / N (half the magnetic pole period), where N is the number of magnetic poles of the stator. Variations in number of U-phase windings stored in respective slots in respective periods are approximated by the first periodic function of a half period (a sinusoidal function in Figs. 7 and 8). U-phase windings for passing currents in the same direction are disposed in a same period. U-phase windings for passing currents in opposite directions are disposed in adjacent periods. A distribution of V-phase windings stored in respective slots is obtained by shifting a distribution of U-phase windings stored in respective slots by a mechanical angle of 240 degrees / N in the circumference direction. A distribution of W-phase windings stored in respective slots is obtained by shifting a distribution of U-phase windings stored in respective slots by a mechanical angle of negative 240 degrees / N (i.e., in an opposite direction as that of V-phase winding by the absolute value of a mechanical angle of 240 degrees / N).

### [Advantageous Effects of Embodiment 1]

As described above, according to the alternating current machine design method of Embodiment 1, placement of the slots is determined by extending the line-current approximation model that yields a near-ideal electromagnetic field distribution. Specifically, each winding cross-section is continuously increased, in the course of which nearest neighbor windings are combined if either one of the following two conditions is met.

### Condition 1: Winding cross-sections overlap.

Condition 2: Combined winding cross-sectional width is greater than a predetermined ratio to the entire stator inner circumference.

In this manner, each winding having through the line-current approximation forms the slot structure by its own judgement based on the distances to adjacent left and right windings. In other words, the slot structure of the stator is determined by self-assembly. Accordingly, the structure of the stator slot can be uniquely determined, independent of a designer, while maintaining ideal electromagnetic field properties as much as possible.

### <Embodiment 2>

Embodiment 2 will be described with respect to a design of a railway 25 kW permanent magnet synchronous motor as an example design of the alternating current machine using the self-assembly design method described in Embodiment 1. In the following, design specifications are, initially, described, and a design result without the self-assembly design method is described, next, as Comparative Example. Thereafter, a design result with the self-assembly design method is described. In the description below, a method that uses a sine wave as the above-mentioned first periodic function (corresponding to a modulated wave of PWM) will be referred to as a self-assembly design method 1, and a method that uses a function obtained by superimposing, on a sine wave, the third harmonic of the sine wave as the first periodic function will be referred to as a self-assembly design method 2.

### [Requirements]

There are two types of permanent magnet synchronous motors: a surface permanent magnet synchronous motor in which a permanent magnet is applied on a rotor core surface; and an interior permanent magnet synchronous motor in which a permanent magnet is disposed within a rotor core. The latter enables exploiting a reluctance torque when the motor is driven at a high speed and the output power is difficult to maintain with an increase of a counter electromotive force. However, the embedded magnet motor has a problem such as a reduction of a power factor. Moreover, high-speed rotation is not envisioned for the railway 25 kW permanent magnet synchronous motor. Accordingly, the motor design described below selects surface permanent magnet synchronous motor.

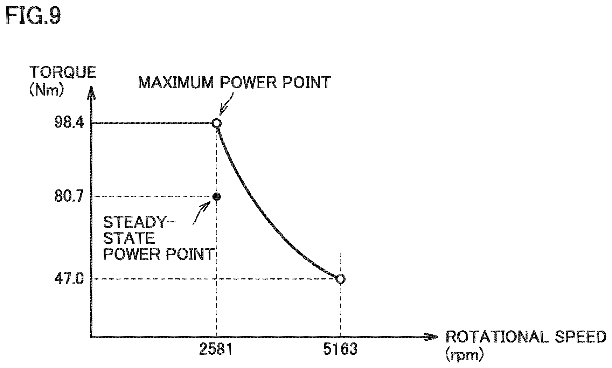

Fig. 9 is a diagram showing requirements of a motor on a plane of torque-rotational speed. Fig. 9 shows a torque (unit: Nm) on the vertical axis, and a rotational speed (unit: rpm (revolution per minute)) on the horizontal axis.

As shown in Fig. 9, the maximum torque value in a low-speed region is set to 98.4 Nm so that the output power (26.6 kW in the case of Fig. 9) at the rotational speed 2581 rpm is greater than the maximum power of 25 kW. Moreover, the maximum torque, in a high-speed region faster than the rotational speed 2581 rpm giving the maximum power, is set so that the above maximum power is maintained, and constant output power characteristics is achieved, that is, torque ∝ rotational speed⁻¹ is met. Meanwhile, as most-frequent driving conditions, (torque, rotational speed) = (80.7 Nm, 2581 rpm) is set, and the same conditions are set as a point of a steady-state power point (i.e., continuous rating).

### [Comparative Example: Without Self-Assembly Design Method]

Initially, as Comparative Example, a design result of designing a permanent magnet synchronous motor without the self-assembly design method so that the requirements of Fig. 9 are met, is described.

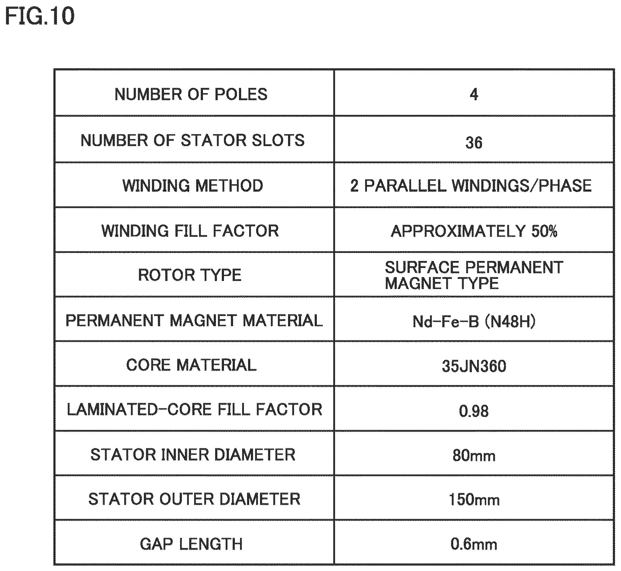

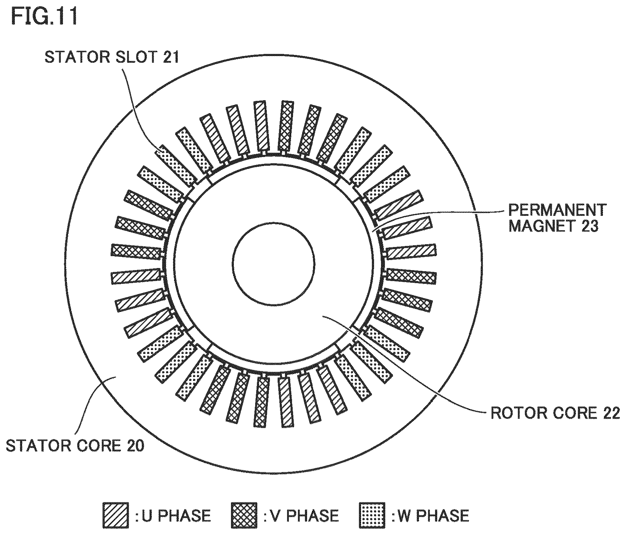

Fig. 10 is a diagram showing a table of specifications of the 25 kW permanent magnet synchronous motor designed as Comparative Example. Fig. 11 is a diagram showing a cross-sectional view of the permanent magnet synchronous motor designed as Comparative Example.

As shown in Fig. 11, 36 stator slots 21 are formed in a stator core 20. Windings of different phases are wound for every three slots. Moreover, four permanent magnets 23 are applied to the surface of a rotor core 22. Adjacent permanent magnets 23 have different polarities.

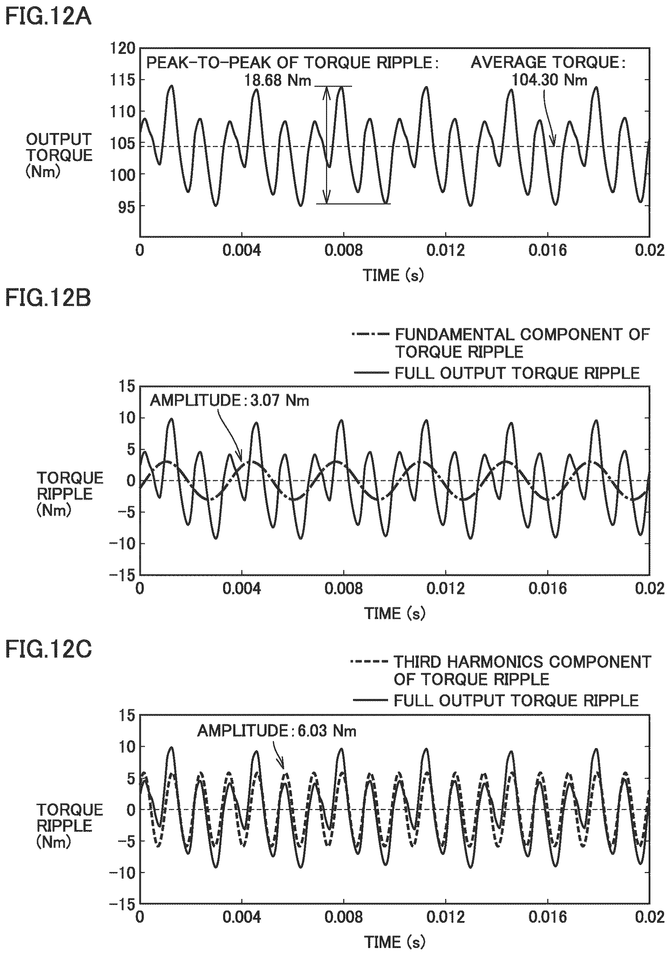

Figs. 12A to 12C are diagrams showing results of analysis of torque characteristics obtained for the maximum power point in the permanent magnet synchronous motor of Comparative Example of Fig. 11. An electromagnetic field calculation program by a finite element method is used for the analysis.

Fig. 12A shows changes in output torque (Nm) over time. As shown in Fig. 12A, an average torque of 104.30 Nm is obtained at the maximum power point, achieving an output power greater than 25 kW. However, peak-to-peak of torque ripple is at 18.68 Nm, which is 10% above the average torque value. The fundamental component and the third harmonics component are extracted from the torque ripple to investigate the cause of the torque ripple.

Fig. 12B is a diagram showing changes over time in fundamental component of the torque ripple of Fig. 12A. Fig. 12C is a diagram showing the third harmonics component of the torque ripple of Fig. 12A. Fig. 12B shows a full output torque ripple by the solid line, and the fundamental component of the torque ripple by the dot-dash line. Fig. 12C shows the full output torque ripple by the solid line and the third harmonics component of the torque ripple by the dashed line.

As shown in Figs. 12B and 12C, the amplitude value of the fundamental component is 3.07 Nm, while the amplitude value of the third harmonics component is 6.03 Nm, which is about twice the amplitude value of the fundamental component. This findings are used to compare with a design result by the self-assembly design method.

### [Self-Assembly Design Method 1: When Modulated Wave is Sine Wave]

Next, a result of designing the motor having the specifications of Fig. 10 by self-assembly design method 1, is described. Self-assembly design method 1 uses a sine wave as the above-mentioned first periodic function (corresponding to a modulated wave of PWM).

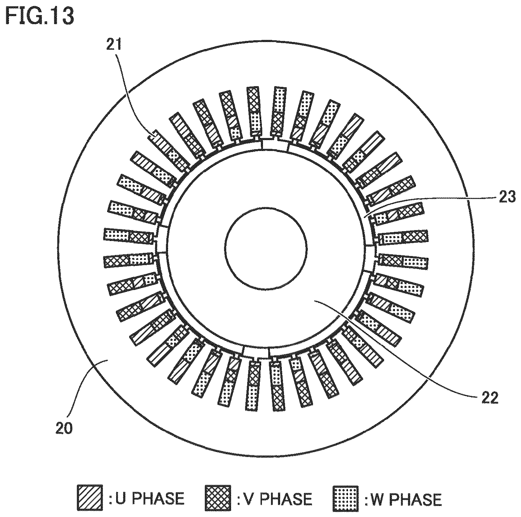

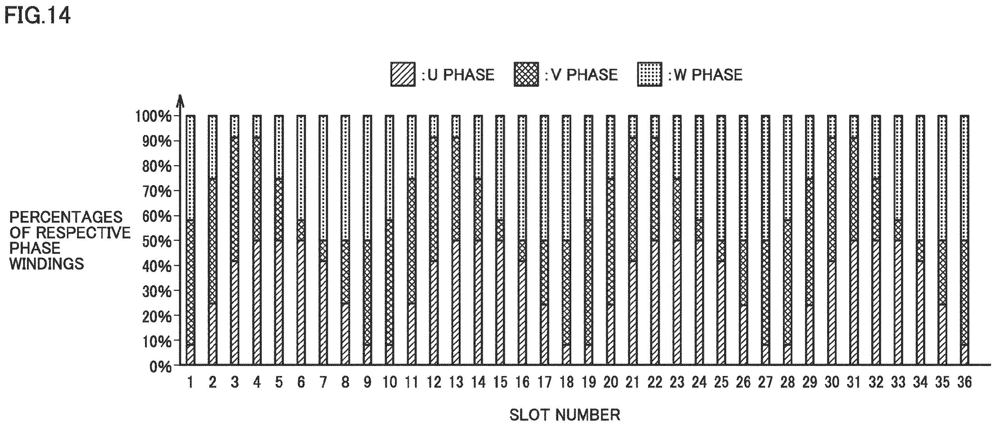

Fig. 13 is a diagram showing a cross-sectional view of the 25 kW permanent magnet synchronous motor designed by self-assembly method 1. Fig. 14 is a diagram showing a percentage of the number of turns of each phase for each stator slot of Fig. 13.

As shown in Figs. 13 and 14, the spatial distribution of the number of turns for each phase winding, when the magnetic pole count N = 4, periodically varies every mechanical angle of 360 degrees / N = 90 degrees so as to correspond to a positive half period of the sine wave. In adjacent periods, windings are disposed so that they pass currents in opposite directions. For example, the directions of the currents through the U-phase windings having slot Nos. 1 to 9 are: opposite the directions of the currents through the U-phase windings having slot Nos. 10 to 18; the same as the directions of the currents through the U-phase windings having slot Nos. 19 to 27; and opposite the directions of the currents through the U-phase windings having slot Nos. 28 to 36.

A V-phase winding spatial distribution is obtained by shifting a U-phase winding spatial distribution in the circumference direction by a mechanical angle of 240 degrees / N = 60 degrees (when N = 4). A W-phase winding spatial distribution is obtained by shifting the U-phase winding spatial distribution in an opposite direction as that of the V-phase winding by a mechanical angle of 240 degrees / N = 60 degrees (when N = 4). The windings of all phases, U phase, V phase, and W phase are disposed in each slot.

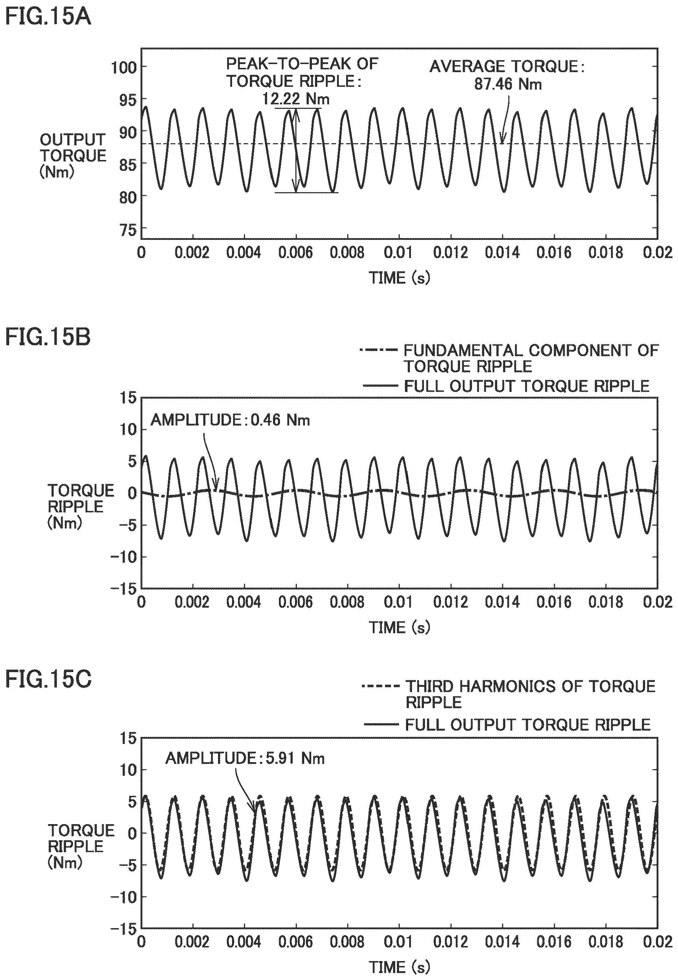

Figs. 15A to 15C are diagrams showing results of analyses of the torque characteristics obtained for the maximum power point in the permanent magnet synchronous motor having the structure of Figs. 13 and 14. An electromagnetic field calculation program by a finite element method is used for the analyses.

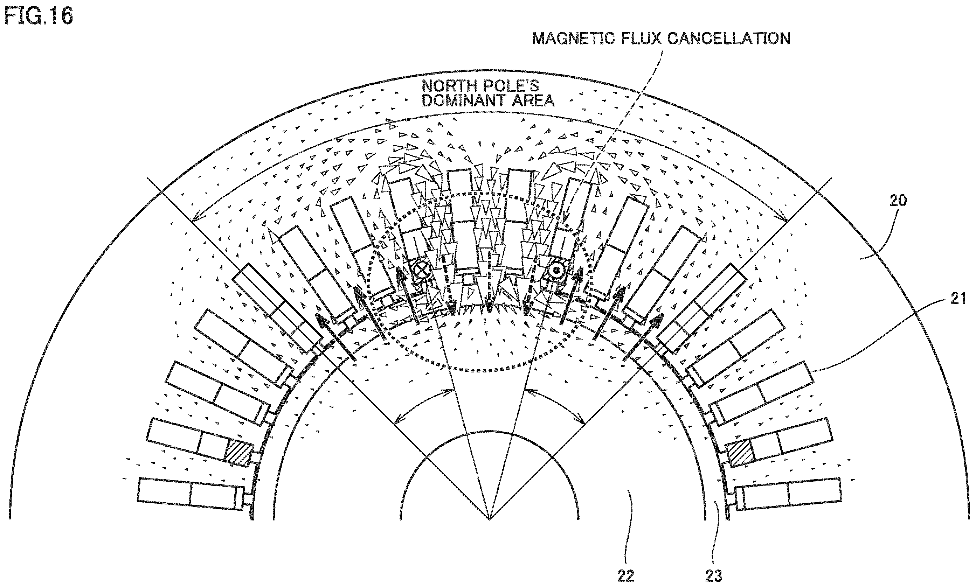

Fig. 15A shows changes in output torque (Nm) over time. As shown in Fig. 15A, peak-to-peak of the torque ripple is 12.22 Nm, which is less than 18.68 Nm of Comparative Example of Fig. 12A. This is contemplated to be because the winding placement by the self-assembly design method is in the manner of a distributed winding. In contrast, the average torque at the maximum power point is 87.46 Nm, which is less than 104.30 Nm of Comparative Example of Fig. 12A. The cause of this will be described below, with reference to Fig. 16.

Fig. 15B is a diagram showing changes over time in fundamental component of the torque ripple of Fig. 15A. Fig. 15C is a diagram showing the third harmonics component of the torque ripple of Fig. 15A. Fig. 15B shows a full output torque ripple by the solid line and the fundamental component of the torque ripple by the dot-dash line. Fig. 15C shows the full output torque ripple by the solid line and the third harmonics component of the torque ripple by the dashed-line.

As shown in Figs. 15B and 15C, the amplitude value of the fundamental component is 0.46 Nm, while the amplitude value of the third harmonics component is 5.91 Nm. Comparing with the conventional example of Figs. 12B and 12C, while the amplitude value of the fundamental component is significantly reduced from 3.07 Nm to 0.46 Nm, the amplitude value of the third harmonics component varies very little, from 6.03 Nm to 5.91 Nm. Accordingly, the effect of reduction of the full torque ripple by the self-assembly design method is achieved as the effect of reduction of the fundamental component, which is contemplated to contribute little to the reduction of the torque ripple of the third harmonics component.

Fig. 16 is a typical magnetic flux density vector plot corresponding to Figs. 15A to 15C. Fig. 16 plots only a magnetic flux density component forming N poles. Magnetic flux cancellation is happening in the area demarcated by the dashed-line, which is contemplated to be the cause of reduction of the average torque.

### [Self-Assembly Design Method 2: When Modulated Wave is Sine Wave + Third Harmonic]

Next, a method is described, which effectively uses the third harmonics component making a small contribution to the torque ripple, to improve the average torque, while maintaining the effects of reduction of the torque ripple.

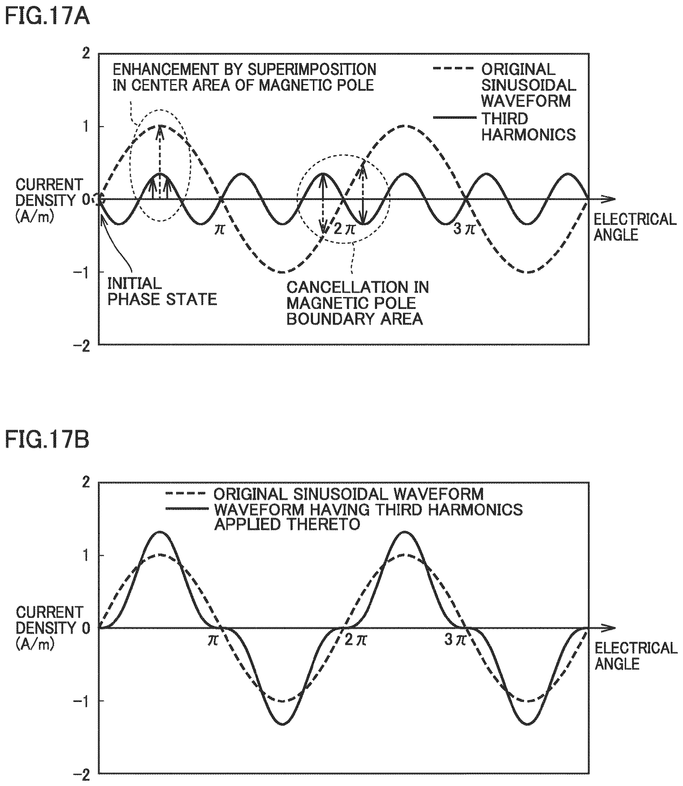

Figs. 17A and 17B are diagrams for illustrating principles of an average-torque improvement method. As shown in Fig. 17A, it is assumed that a third-harmonic distribution (the solid line), which has a low contribution to the effect of reduction of the torque ripple, is superimposed on a current density distribution (the dashed-line) of the sine wave used in self-assembly design method 1.

Here, the third-harmonic distribution is represented as K2·sin (3θ - π), where the sine wave distribution is represented in K1·sinθ with an electrical angle θ. In this case, the current density is enhanced by superimposing the third-harmonic distribution around the peak of the sine wave distribution, which is the center area of the magnetic pole, and the current density is cancelled around zero of the sine wave distribution, which is a magnetic pole boundary area. As noted above, the magnetic flux cancellation occurs in the magnetic pole boundary area in which the magnetic flux density is zero. However, since the current density is cancelled by superimposing the third harmonics component, the average torque is expected to improve. Note that an amplitude K2 of the third harmonic is set to, for example, about 20% of an amplitude K1 of the sine wave.

Thus, as indicated by the solid line of Fig. 17B, a distorted-wave spatial current distribution, obtained by applying the third harmonics component to the sine wave distribution, is used as the initial distribution for generating the line-current approximation model. Then, a stator slot is designed for the initial distribution, using the self-assembly design method. In the present disclosure, a method that uses the distorted-wave current distribution as the initial distribution, will be referred to as self-assembly design method 2. In the following, a result of designing the motor having the specifications of Fig. 10 by self-assembly design method 2, is described.

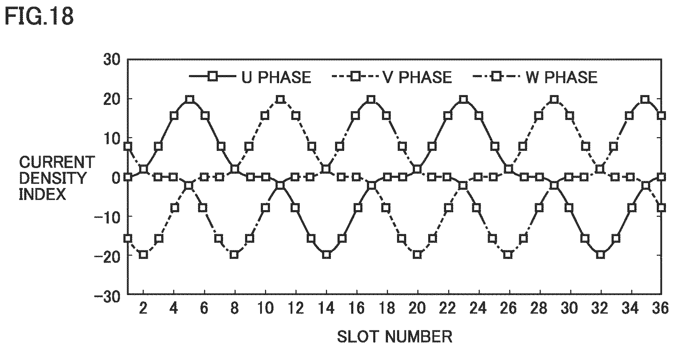

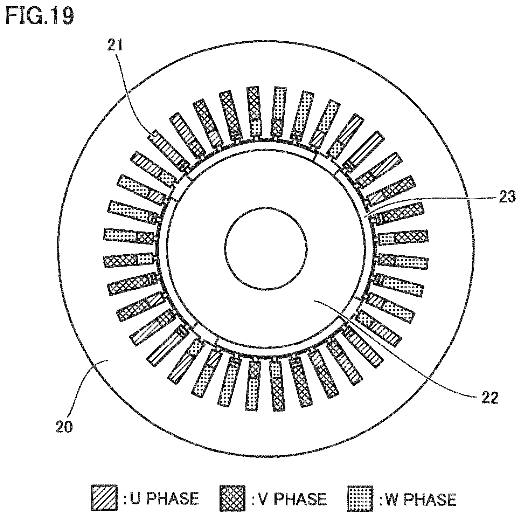

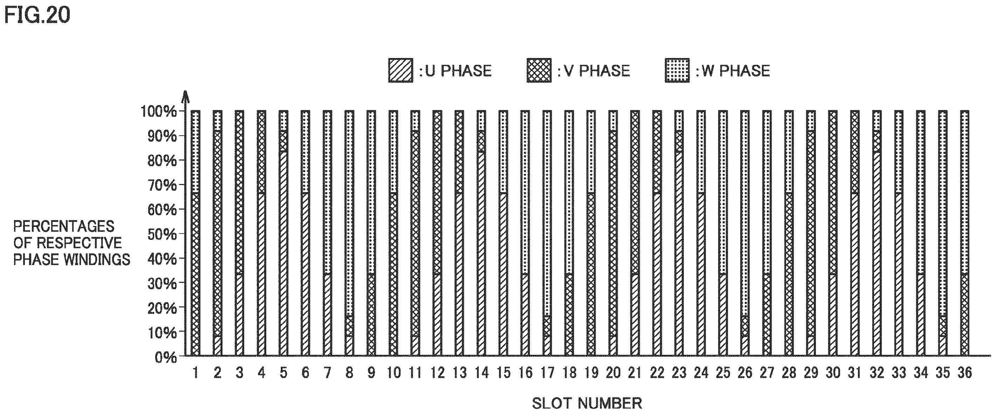

Fig. 18 is a diagram showing U-phase, V-phase, and W-phase current distributions by the line-current approximation model, prior to performance of self-assembly design method 2. Fig. 19 is a diagram showing a cross-sectional view of the 25 kW permanent magnet synchronous motor designed by self-assembly method 2. Fig. 20 is a diagram showing a percentage of the number of turns of each phase for each stator slot of Fig. 19.

As shown in Figs. 19 and 20, the spatial distribution of the number of turns for each phase winding, when the magnetic pole count N = 4, periodically varies every mechanical angle of 360 degrees / N = 90 degrees. The spatial distribution of the number of turns for each phase winding in this case is reflecting the shape of the first periodic function used in the line-current approximation model, and approximated by Fourier series that uses the fundamental component and the third harmonics component as primary components. Specifically, a fitted curve approximating the number of windings of each phase for each period has a shape obtained by superimposing the third harmonic on a positive half period of the sine wave that is the fundamental wave, in a phase relationship enhancing the sine wave around a peak value and cancelling the sine wave around zero. Windings are disposed so that those in a common period pass currents in the same direction, and those in adjacent periods pass currents in opposite directions. For example, the directions of the currents through the U-phase windings having slot Nos. 1 to 9 are: opposite the directions of the currents through the U-phase windings having slot Nos. 10 to 18; the same as the directions of the currents through the U-phase windings having slot Nos. 19 to 27; and opposite the directions of the currents through the U-phase windings having slot Nos. 28 to 36.

A V-phase winding spatial distribution is obtained by shifting a U-phase winding spatial distribution in the circumference direction by a mechanical angle of 240 degrees / N = 60 degrees (when N = 4). A W-phase winding spatial distribution is obtained by shifting the U-phase winding spatial distribution by a mechanical angle of negative 240 degrees / N = -60 degrees (when N = 4) (i.e., in an opposite direction as that of V-phase winding by the absolute value of a mechanical angle of 240 degrees / N (when N = 4)).

Windings of at least two phases are disposed in each slot. For example, in the example of Fig. 20, the stator slots with slot Nos. 2, 5, 8, 11, 14, 17, 20, 23, 26, 29, 32, and 35 each store windings of all three phases. Windings of any two phases are disposed in stator slots with the other slot Nos.

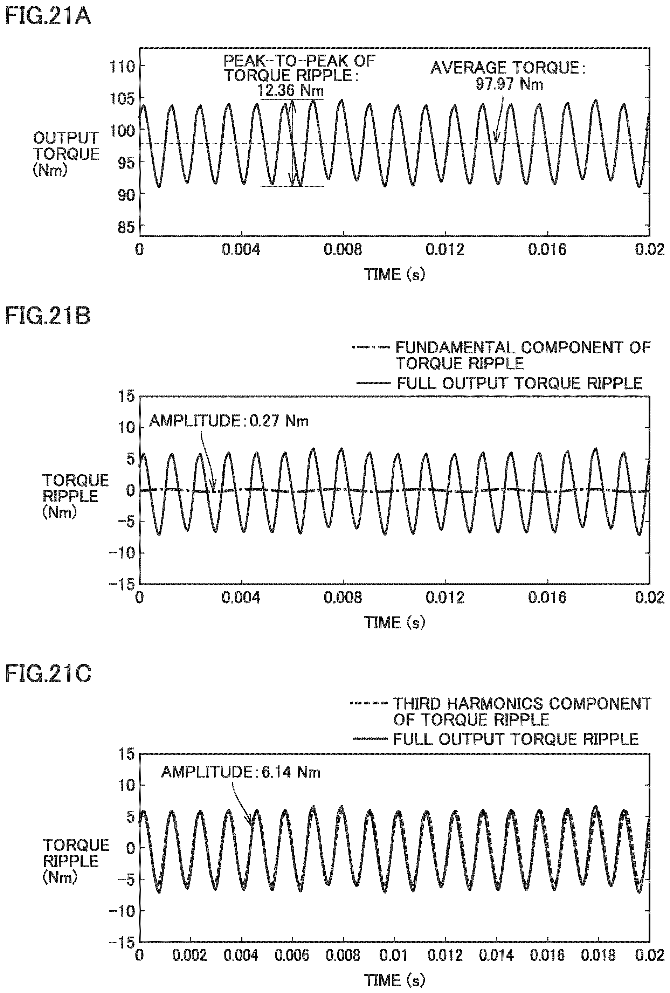

Figs. 21A to 21C are diagrams showing results of analyses of the torque characteristics obtained for the maximum power point in the permanent magnet synchronous motor having the structure of Figs. 19 and 20. An electromagnetic field calculation program by a finite element method is used for the analyses.

Fig. 21A shows changes in output torque (Nm) over time. As shown in Fig. 21A, the average torque value at the maximum power point is 97.97 Nm, which is improvement by 10 Nm or greater, as compared to 87.46 Nm, which is the average torque value for self-assembly design method 1 of Fig. 15A. In contrast, peak-to-peak of the torque ripple is 12.36 Nm, which is largely unchanged from 12.22 Nm, which is peak-to-peak of the torque ripple for self-assembly design method 1 of Fig. 15A. Accordingly, this suggests that the superimposition of the third harmonics component has small effects on the torque ripple.

Fig. 21B is a diagram showing changes over time in fundamental component of the torque ripple of Fig. 21A. Fig. 21C is a diagram showing the third harmonics component of the torque ripple of Fig. 21A. Fig. 21B shows a full output torque ripple by the solid line and the fundamental component of the torque ripple by the dot-dash line. Fig. 21C shows the full output torque ripple by the solid line and the third harmonics component of the torque ripple by the dashed-line.

As shown in Figs. 21B and 21C, the amplitude value of the fundamental component is 0.27 Nm, while the amplitude value of the third harmonics component is 6.14 Nm. Comparing with self-assembly design method 1 of Figs. 15B and 15C, it is confirmed that the amplitude values of both the fundamental component and the third harmonics component have not changed much.

### [Summary of Embodiment 2]

According to the above self-assembly design method 2, the first periodic function (corresponding to a modulated wave of PWM) described in Embodiment 1 is a function in which the third harmonic is superimposed on the sinusoidal function that is the fundamental wave, in a phase relationship enhancing a value of the sinusoidal function around a peak value of the sinusoidal function and cancelling a value of the sinusoidal function around a zero-value of the sinusoidal function. Designing the stator slot by the self-assembly design method using such a first periodic function achieves an increased average torque, while the torque ripple being reduced.

In the stator actually produced according to the above design method, a distribution of the number of windings of a first phase, which is any one of the phases, stored in each of the slots periodically varies in the circumference direction, and is approximated by Fourier series that uses the fundamental component and the third harmonics component as the primary components. In other words, the circumferential distribution of the number of windings for each phase is reflecting the shape of the above first periodic function. Specifically, a fitted curve of the distribution of the number of windings of the first phase for each period has a shape obtained by superimposing the third harmonic on the sinusoidal function that is the fundamental wave, in a phase relationship enhancing a value of the sinusoidal function around a peak value of the sinusoidal function and cancelling a value of the sinusoidal function around a zero-value of the sinusoidal function.

### <Alternating Current Machine Production Method>

Using self-assembly design method 2 described in Embodiments 1 and 2 above, an alternating current machine having a large output torque and a small torque ripple can be produced. Note that the alternating current machine is not limited to the permanent magnet synchronous motor described in Embodiment 2. For example, the alternating current machine may be an induction machine or a synchronous machine. The alternating current machine may also be a generator or an electric motor.

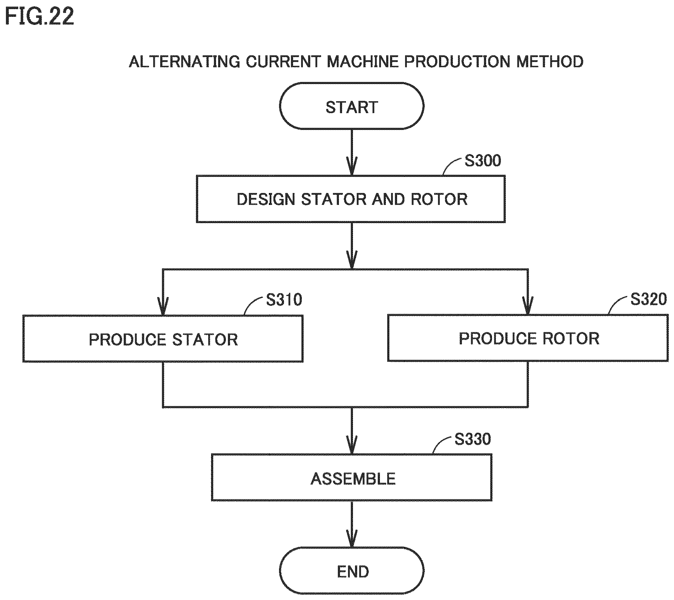

Fig. 22 is a flowchart illustrating one example of an alternating current machine production method. Specifically, as shown in Fig. 22, in step S300, a stator and a rotor are designed as a unit, and based on the design, the stator is produced in step S310, and the rotor is produced in step S320. Here, the stator slot is designed, using self-assembly design method 2 described in Embodiments 1 and 2. In the next step S330, the stator and the rotor are assembled to produce an alternating current machine.

### <Design Assistance Device>

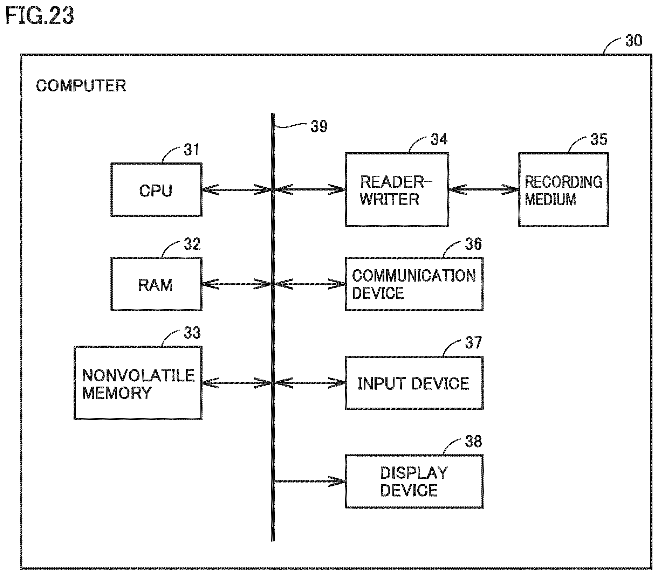

Fig. 23 is a block diagram showing an example configuration of a computer for executing the design procedure of Figs. 2 and 5. As shown in Fig. 23, a computer 30 includes a central processing unit (CPU) 31, a random access memory (RAM) 32, a nonvolatile memory 33, a reader-writer 34 (may be a reader only), a recording medium 35, a communication device 36, an input device 37, and a display device 38, which are interconnected via a bus 39.

The function of computer 30, as a design assistance device, is implemented by CPU 31 executing programs. RAM 32 is used as primarily storage of CPU 31. The nonvolatile memory 33 stores programs executed by CPU 31. The programs provided in recording medium 35, and read into computer 30 via reader-writer 34. Alternatively, the programs may be provided via a network and loaded into computer 30 via communication device 36.

Input device 37 includes, for example, a keyboard and a mouse for receiving user inputs. Display device 38 includes, for example, a liquid crystal display or an organic EL (Electroluminescence) display. Input device 37 and display device 38 may be integrated together and configured as a touch panel.

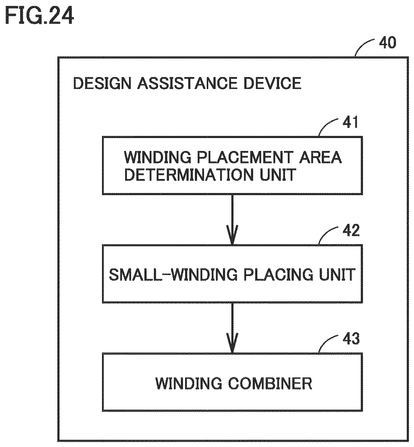

Fig. 24 is a functional block diagram showing the function of computer 30 as a design assistance device. Referring to Fig. 24, a design assistance device 40, functionally, includes a winding placement area determination unit 41, a small-winding placing unit 42, and a winding combiner 43, which can be considered as corresponding to modules of programs executed by computer 30. Note that the module separation is for convenience, and, for example, winding placement area determination unit 41 and small-winding placing unit 42 may be configured as a common module.

Specifically, winding placement area determination unit 41 approximates the absolute value of the first periodic function, which changes in the circumference direction in a magnetic pole period of the stator of the alternating current machine, with a pulse function having a pulse width depending on the absolute value of the first periodic function. Winding placement area determination unit 41 determines an area in which the pulse function is on-pulse, as a winding placement area. Here, the first periodic function is a function obtained by superimposing the third harmonic on the sinusoidal function, which is the fundamental wave, in a phase relationship enhancing a peak value of the sinusoidal function around the peak value and cancelling a zero-value of the sinusoidal function around the zero-value.

Small-winding placing unit 42 places a large number of windings each having a small cross-sectional area, equidistantly in the determined winding placement area.

Winding combiner 43 expands the cross-sectional area of each winding, and, when adjacent windings overlap or when a ratio of a portion of the stator, in which windings are wound, to the circumferential length of the stator is greater than a predetermined ratio, combines nearest neighbor windings to generate a new winding as a winding assemblage. The winding assemblage is a winding having a total number of windings combined and the sum of the cross-sectional areas of the windings combined. Combining a first winding and a second winding includes placing a combined winding between the first winding and the second winding. When the number of winding assemblages, obtained as a result of expanding the cross-sectional area of each winding, reaches a desired count, winding combiner 43 determines the positions of placements of winding assemblages to be the positions of placements of slots storing the winding assemblages.

The presently disclosed embodiments should be considered in all aspects as illustrative and not restrictive. The scope of the present application is defined by the terms of the claims, rather than the embodiments described above, and is intended to include any modifications within the scope and meaning equivalent to the terms of the claims.

### REFERENCE SIGNS LIST

10 rotary machine; 11 stator; 12 rotor; 13 air gap; 20 stator core; 21 stator slot; 22 rotor core; 23 permanent magnet; 25 kW maximum power; 30 computer; 31 CPU; 32 RAM; 33 nonvolatile memory; 34 reader-writer; 35 recording medium; 36 communication device; 37 input device; 38 display device; 39 bus; 40 design assistance device; 41 winding placement area determination unit; 42 small-winding placing unit; 43 winding combiner; and SL1 to SL6 slot.

## Claims

1. An alternating current machine, comprising:
a rotor;
a stator having a plurality of slots placed opposite the rotor in a circumference direction of the stator; and
windings of a plurality of phases wound in the plurality of slots, wherein
a total number of windings of a first phase stored in each of the plurality of slots periodically varies in the circumference direction, the first phase being any one of the plurality of phases, and
a distribution of the total number of windings of the first phase for each period is approximated by Fourier series that uses a fundamental component and a third harmonics component as primary components, and a fitted curve of the distribution has a shape obtained by superimposing the third harmonic on a positive half period of a sinusoidal function that is a fundamental wave, in a phase relationship enhancing a value of the sinusoidal function around a peak value of the sinusoidal function and cancelling a value of the sinusoidal function around a zero-value of the sinusoidal function.

2. The alternating current machine according to claim 1, wherein
the windings of the first phase are disposed in a manner that when any two windings of the windings of the first phase is included in a common period of the distribution of the total number of windings of the first phase, the two windings pass currents in a same direction, and when the two windings are included in adjacent periods, the two windings pass currents in opposite directions.

3. The alternating current machine according to claim 2, wherein
the alternating current machine is a 3-phase N-pole alternating current machine, and
the total number of windings of the first phase stored in each of the plurality of slots periodically varies in the circumference direction in a period of a mechanical angle of 360 degrees / N,
a distribution of windings of a second phase stored in each of the plurality of slots is obtained by shifting the distribution of the windings of the first phase stored in each of the plurality of slots in the circumference direction by an absolute value of a mechanical angle of 240 degrees / N, and
a distribution of windings of a third phase stored in each of the plurality of slots is obtained by shifting the distribution of the windings of the first phase in an opposite direction as that of the windings of the second phase by an absolute value of a mechanical angle of 240 degrees / N.

4. The alternating current machine according to any one of claims 1 to 3, wherein
windings of at least two phases are disposed in a same slot.

5. A design method for an alternating current machine, the design method comprising:
approximating, by a computer, an absolute value of a first periodic function, which changes in a circumference direction of a stator of the alternating current machine in a magnetic pole period of the stator, with a pulse function having a pulse width depending on an absolute value of the first periodic function, to determine an area, in which the pulse function is on-pulse, as a winding placement area, wherein
the first periodic function is a function obtained by superimposing a third harmonic on a sinusoidal function that is a fundamental wave, in a phase relationship enhancing a value of the sinusoidal function around a peak value of the sinusoidal function and cancelling a value of the sinusoidal function around a zero-value of the sinusoidal function,
the design method further comprising:
placing a large number of windings, each having a small cross-sectional area, equidistantly in the determined winding placement area; and
expanding, by the computer, the cross-sectional area of each winding to combine nearest neighbor windings to generate a new winding as a winding assemblage when adjacent windings overlap or when a ratio of a portion of the stator, in which the windings are wound, to a circumferential length of the stator is greater than a predetermined ratio, wherein
the winding assemblage is a winding having a total number of a plurality of windings combined and a sum of cross-sectional areas of the plurality of windings combined, and combining a first winding and a second winding includes placing a combined winding between the first winding and the second winding,
the design method further comprising:
when a total number of winding assemblages, obtained as a result of expanding the cross-sectional area of each winding, reaches a desired count, determining, by the computer, positions of placements of the winding assemblages to be positions of placements of slots storing the winding assemblages.

6. The design method for the alternating current machine according to claim 5, wherein
combining the first winding and the second winding includes placing a combined winding at a position internally dividing a distance from the first winding to the second winding by an inverse ratio of a cross-sectional area of the first winding and a cross-sectional area of the second winding.

7. An alternating current machine production method, comprising
forming the slots in slot placement positions determined according to the design method for the alternating current machine according to claim 5 or 6 to produce a stator; and
producing a rotor.

8. A design assistance device of an alternating current machine, the design assistance device comprising:
a winding placement area determination unit that approximates an absolute value of a first periodic function, which changes in a circumference direction of a stator of the alternating current machine in a magnetic pole period of the stator, with a pulse function having a pulse width depending on an absolute value of the first periodic function to determine an area, in which the pulse function is on-pulse, as a winding placement area, wherein
the first periodic function is a function obtained by superimposing a third harmonic on a sinusoidal function that is a fundamental wave, in a phase relationship enhancing a value of the sinusoidal function around a peak value of the sinusoidal function and cancelling a value of the sinusoidal function around a zero-value of the sinusoidal function,
the design assistance device further comprising:
a small-winding placing unit that places a large number of windings, each having a small cross-sectional area, equidistantly in the determined winding placement area; and
a winding combiner that expands the cross-sectional area of each winding to combine nearest neighbor windings to generate a new winding as a winding assemblage when adjacent windings overlap or when a ratio of a portion of the stator, in which the windings are wound, to a circumferential length of the stator is greater than a predetermined ratio, wherein
the winding assemblage is a winding having a total number of a plurality of windings combined and a sum of cross-sectional areas of the plurality of windings combined, and combining a first winding and a second winding includes placing a combined winding between the first winding and the second winding, and
when a total number of winding assemblages, obtained as a result of expanding the cross-sectional area of each winding, reaches a desired count, the winding combiner determines positions of placements of the winding assemblages to be positions of placements of slots storing the winding assemblages.
